# EUROPEAN PATENT SPECIFICATION

(11) **EP 3 731 717 B1**
(45) Date of publication and mention of the grant of the patent: **07.02.2024**
(21) Application number: 18793194.4
(22) Date of filing: 18.10.2018
(51) Int. Cl.: A47L 15/42

(54) **A HEAT PUMP DISHWASHER WITH DECREASED WATER CONSUMPTION**
GESCHIRRSPÜLMASCHINE MIT WÄRMEPUMPE MIT VERRINGERTEM WASSERVERBRAUCH
LAVE-VAISSELLE À POMPE À CHALEUR À CONSOMMATION D'EAU RÉDUITE

(30) Priority: 25.12.2017 TR 201721443
(43) Date of publication of application: 04.11.2020
(73) Proprietor: Arçelik Anonim Sirketi, 34445 Istanbul (TR)
(72) Inventor: KUTUK, Erkan, 34950 Istanbul (TR); POYRAZ, Onur, 34950 Istanbul (TR); GOKDERE, Nurgul, 34950 Istanbul (TR); CALISKAN, Huseyin, 34950 Istanbul (TR); ERMAN, Caner, 34950 Istanbul (TR)
(86) International application number: PCT/EP2018/078580
(87) International publication number: WO 2019/129404

(56) References cited:
- EP-A2- 2 682 037
- WO-A1-2016/004990
- CN-A- 106 606 342
- JP-A- 2007 117 556
- JP-A- 2007 125 198

## Description

The present invention relates to a heat pump dishwasher.

The heat pump system in the heat pump dishwashers is composed of a compressor that pressurizes the refrigerant and provides the circulation thereof, flow tubes wherein the refrigerant circulates, a condenser, an evaporator, and an expansion element. Like in the conventional dishwashers, the washing program in the heat pump dishwashers is generally composed of the steps of main washing, cold rinsing, hot rinsing and drying. In these steps, the water heating process is realized by means of the heat pump system. In the heat pump dishwashers, with the compressor compressing and pressurizing the refrigerant, the refrigerant gains high pressure and high temperature. The refrigerant reaching the condenser after leaving the compressor gives off heat to the outer environment, thus the temperature thereof starts decreasing and the refrigerant condenses. The gas at low temperature and high pressure is passed through the expansion element and the pressure thereof is decreased, and the gas liquefies. Afterwards, the refrigerant at low temperature and low pressure draws heat from the environment while passing through evaporator and changes from the liquid phase into gas phase and vaporizes. Then, the refrigerant reaches the compressor and this cycle is repeated. In order to provide savings in water and energy in the heat pump dishwasher, a know method for example is to discharge only some of the dirty water to be discharged after the pre-washing step and to use the undischarged water in the next step, for example the main washing step. However, in this method, if there is excessive dirt in the water that is not discharged so as to be used in the next washing step, the washing performance is adversely affected. Therefore, all the water should be discharged in the intermediate discharging process, and no saving can be provided in terms of water.

Patent application No. JP2007125198 A discloses a dishwasher having an evaporator and a condensation receptacle placed in an exhaust air passage blowing drying air exhausted from the wash tub of the machine.

The Patent Application No. CN 106852673 (A) relates to a heat pump dishwasher with improved washing performance.

The Patent Applications No. TW200727847 (A) and No. TW200727848 (A) relate to heat pump dishwashers comprising a condenser with improved heating performance.

The aim of the present invention is the realization of a heat pump dishwasher wherein the amount of washing water used is decreased so as to provide savings in water consumption.

The dishwasher realized in order to attain the aim of the present invention comprises a heat pump system that is composed of a compressor, a condenser, an evaporator, refrigerant flow tubes and an expansion element that together perform the refrigerant cycle. The condenser acts as a heater, and the washing water is heated by the condenser placed into a sump.

The dishwasher of the present invention comprises a hot air duct that enables the hot and humid air in the washing environment in the tub to be directed onto the evaporator so as to increase the amount of condensation on the evaporator surface with the aim of providing water savings by means of the heat pump system. The water condensing on the evaporator is collected in the condensation receptacle under the evaporator. The pure water that is collected in the condensation receptacle and suitable for using in the washing process in the dishwasher is delivered to a tank or directly to the washing environment to be used in the washing process by means of a water supply line and a water supply pump on said line.

In an embodiment of the present invention, the hot air duct is connected to the drying duct, and the air circulated in the drying duct by means of the drying fan is enabled to be at least partially delivered into the hot air duct and to be sent to the evaporator from there.

In another embodiment of the present invention, the hot air duct is independent of the drying duct, and the dishwasher comprises a hot air fan that enables the hot and humid air in the tub to flow in the hot air duct so as to be directly guided to the evaporator.

The heat pump dishwasher realized in order to attain the aim of the present invention is illustrated in the attached figures, where:
Figure 1 - is the schematic view of the heat pump dishwasher of the present invention.
Figure 2 - is the schematic view of the heat pump dishwasher in another embodiment of the present invention.

The elements illustrated in the figures are numbered as follows:
1. Dishwasher
2. Tub
3. Sump
4. Circulation pump
5. Heat pump system
6. Compressor
7. Condenser receptacle
8. Condenser
9. Evaporator
10. Evaporator fan
11. Hot air duct
12. Condensation receptacle
13. Water supply line
14. Water supply pump
15. Tank
16. Hot air fan
17. Drying duct
18. Drying fan
19. Shutter
20. Rack
21. Spray arm
22. Expansion element

The dishwasher (1) comprises a tub (2) wherein the processes of washing, rinsing and drying are performed; a sump (3) that is disposed at the lower part of the tub (2) and wherein the washing water is collected; at least one rack (20) wherein the items to be washed are placed; a circulation pump (4) that provides the delivery of the washing water onto the items to be washed by means of at least one spray arm (21), and a heat pump system (5) that is disposed at the lower part of the tub (2) and that provides the heating of the washing water.

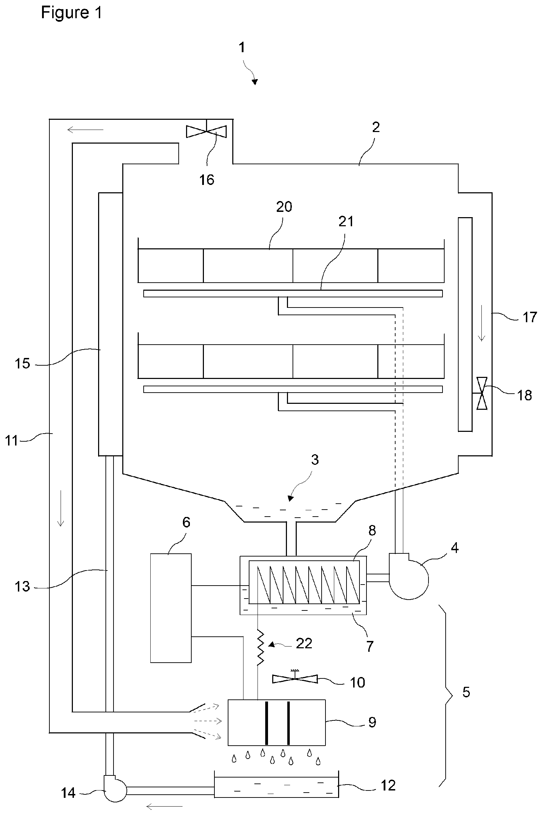

The heat pump system (5) comprises a compressor (6) that performs the refrigerant cycle; a condenser (8) that emanates heat by condensing the refrigerant (refrigerant fluid) pressurized by the compressor (6) and that is used for heating the washing water by being disposed in a condenser receptacle (7) wherein the washing water is collected; an evaporator (9) that evaporates the refrigerant so as to draw heat from the outer environment and to transfer the same to the condenser (8); at least one evaporator fan (10) that provides the heat transfer by blowing the ambient air onto the evaporator (9), and an expansion element (22), for example a capillary tube or an expansion valve, that provides the expansion of the refrigerant flowing from the condenser (8) to the evaporator (9) (Figure 1).

The condenser (8) in the heat pump system (5) is used for heating the washing water that is taken into the condenser receptacle (7). The heat transfer required for enabling the refrigerant passing through the evaporator (9) to change to the vapor phase is provided by means of the evaporator fans (10).

The dishwasher (1) of the present invention comprises
- a hot air duct (11) that enables the hot and humid air in the washing environment in the tub (2) to be directed onto the evaporator (9) so as to increase the amount of condensation on the evaporator (9) surface with the aim of providing water savings by means of the heat pump system (5),
- a condensation receptacle (12) that is disposed under the evaporator (9) and wherein the water condensing on the evaporator (9) is collected, and
- a water supply line (13) and a water supply pump (14) that delivers the water in the condensation receptacle (12) to be used in the washing process.

In the dishwasher (1) during the washing step, the dirt level in the water in the washing environment in the tub (2) increases, and since the water is heated, the tub (2) contains hot and humid air. In the embodiment of the present invention, the humid and hot air in the tub (2) is enabled to be passed over the evaporator (9) throughout the washing and/or drying step by means of the hot air duct (11). The hot air directed from the hot air duct (11) to the evaporator (9) provides a supplementary heat transfer in addition to the heat transfer provided by the evaporator fans (10). The air with high humidity coming from the hot air duct (11) passes over the evaporator (9) in addition to the air blown by the evaporator fans (10). A higher amount of water than the state of the art embodiments is collected in the condensation receptacle (12). Since the water collected in the condensation receptacle (12) is condensed from moisture, it is pure water and does not contain lime so can be used in washing operations in the dishwasher (1). In the dishwasher (1), the humid and hot air in the tub (2) is delivered onto the evaporator (9) during the washing and/or drying step, the amount of water in the washing environment in the tub (2) decreases during the washing step. The amount of dirty water remaining in the sump (3) in the tub (2) at the end of the washing step is low and all of it can be discharged. The evaporator (9) draws heat from the hot air duct (11) in addition to the outer environment, thus improving the efficiency in the heat pump system (5). Although the hot air duct (11) has an effect particularly in decreasing the temperature of the washing water, the thermal energy lost from the hot air duct (11) is recovered from the highly efficient evaporator (9) and the condenser (8) with increased heating performance as being connected to the evaporator (9).

In an embodiment of the present invention, the dishwasher (1) comprises a tank (15) that enables the water to be collected before the washing process and brought to the ambient temperature and thus shortening the water heating time during the washing process and providing savings in energy, and the water supply line (13) that delivers the water in the condensation receptacle (12) to the tank (15). When the dishwasher (1) reaches the next washing step or starts a new washing operation, the water in the tank (15) is mixed with the washing water, which results in taking less water from the mains and providing savings in water (Figure 1).

In another embodiment of the present invention, the water supply line (13) transfers the water in the condensation receptacle (12) directly to the sump (3).

In an embodiment of the present invention, the dishwasher (1) comprises a hot air fan (16) that enables the hot and humid air in the tub (2) to flow in the hot air duct (11) so as to be guided to the evaporator (9) (Figure 1).

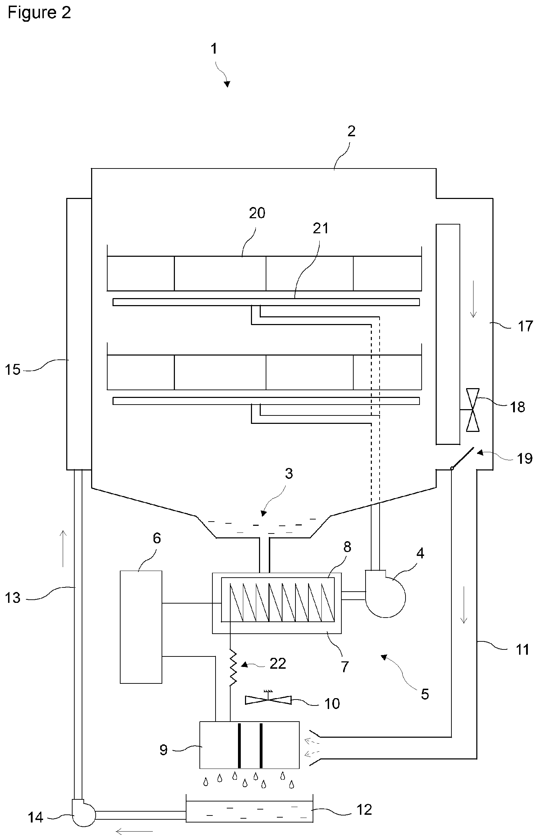

In another embodiment of the present invention, the dishwasher (1) comprises a drying duct (17) that takes the humid air in the tub (2) out of the tub (2) after the washing process and thus enables the washed items to be dried, and a drying fan (18) that provides the air flow through the drying duct (17). The hot air duct (11) is fluidly connected to the drying duct (17), and the air circulated through the drying duct (17) by means of the drying fan (18) is at least partially guided to pass into the hot air duct (11) and sent from there to the evaporator (9) (Figure 2).

In another embodiment of the present invention, the dishwasher (1) comprises a shutter (19) that is disposed between the drying duct (17) and the hot air duct (11), and that enables the hot and humid air received from the tub (2) to be guided to the evaporator (9) through the hot air duct (11) or back into the tub (2) through the drying duct (17) (Figure 2).

In the dishwasher (1) of the present invention, the water obtained as a result of the condensation on the evaporator (9) is used for washing, decreasing water consumption. The amount of clean water used for washing is increased and the washing performance is improved. By transferring more heat to the evaporator (9), the efficiency of the heat pump system (5) is increased, providing savings in energy.

## Claims

1. - A dishwasher (1) **comprising** a tub (2); a sump (3) wherein the washing water is collected; a circulation pump (4) that provides the delivery of the washing water onto the items to be washed; a heat pump system (5) at the lower part of the tub (2) that provides the heating of the washing water; a compressor (6), a condenser receptacle (7), a condenser (8), an evaporator (9) and at least one evaporator fan (10) that constitute the heat pump system (5); a hot air duct (11) that enables the hot and humid air in the washing environment in the tub (2) to be directed onto the evaporator (9) so as to increase the amount of condensation on the evaporator (9) surface; and a condensation receptacle (12) that is disposed under the evaporator (9) and wherein the water condensing on the evaporator (9) is collected; **characterized in that** the evaporator fan (10) is arranged to blow ambient air onto the evaporator (9) so as to further increase the amount of condensation on the evaporator (9) surface, and the dishwasher (1) further comprises a water supply line (13) and a water supply pump (14) that delivers the water in the condensation receptacle (12) to be used in the washing process.

2. - A dishwasher (1) as in Claim 1, **characterized by** a tank (15) and the water supply line (13) that transfers the water in the condensation receptacle (12) to the tank (15).

3. - A dishwasher (1) as in Claim 1, **characterized by** the water supply line (13) that transfers the water in the condensation receptacle (12) directly to the sump (3).

4. - A dishwasher (1) as in Claim 1, **characterized by** a hot air fan (16) that enables the hot and humid air in the tub (2) to flow in the hot air duct (11) so as to be guided to the evaporator (9).

5. - A dishwasher (1) as in Claim 1, comprising a drying duct (17) and a drying fan (18), **characterized by** the hot air duct (11) that is fluidly connected to the drying duct (17), and whereto the hot and humid air circulated through the drying duct (17) is at least partially guided.

6. - A dishwasher (1) as in Claim 5, **characterized by** a shutter (19) that is disposed between the drying duct (17) and the hot air duct (11).

## Patentansprüche

1. - Eine Geschirrspülmaschine (1) **umfasst** eine Wanne (2); einen Sumpf (3), in dem das Waschwasser gesammelt wird; eine Umwälzpumpe (4), die für die Förderung des Spülwassers auf die zu waschenden Gegenstände sorgt; ein Wärmepumpensystem (5) im unteren Teil der Wanne (2), das für die Erwärmung des Waschwassers sorgt; einen Kompressor (6), einen Kondensatorbehälter (7), einen Kondensator (8), einen Verdampfer (9) und mindestens einen Verdampferventilator (10), die das Wärmepumpensystem (5) bilden; einen Heißluftkanal (11), der es ermöglicht, die heiße und feuchte Luft in der Waschumgebung in der Wanne (2) auf den Verdampfer (9) zu leiten, um so die Kondensationsmenge auf der Oberfläche des Verdampfers (9) zu erhöhen; und einen Kondensationsbehälter (12), der unter dem Verdampfer (9) angeordnet ist und in dem das am Verdampfer (9) kondensierende Wasser gesammelt wird; **gekennzeichnet ist sie dadurch,** dass der Verdampferventilator (10) so angeordnet ist, dass er Umgebungsluft auf den Verdampfer (9) bläst, um so die Kondensationsmenge auf der Oberfläche des Verdampfers (9) weiter zu erhöhen, und die Geschirrspülmaschine (1) weiterhin eine Wasserversorgungsleitung (13) und eine Wasserversorgungspumpe (14) umfasst, die das Wasser im Kondenswasserbehälter (12) zur Verwendung im Spülvorgang fördert.

2. - Eine Geschirrspülmaschine (1), wie in Anspruch 1 aufgeführt, **ist dadurch gekennzeichnet, dass** ein Tank (15) und die Wasserzuleitung (13) das Wasser im Kondenswasserbehälter (12) zum Tank (15) übertragen.

3. - Eine Geschirrspülmaschine (1), wie in Anspruch 1 aufgeführt, **ist dadurch gekennzeichnet, dass** die Wasserzuleitung (13) das Wasser im Kondenswasserbehälter (12) direkt zum Sammelbehälter (3) leitet.

4. - Eine Geschirrspülmaschine (1), wie in Anspruch 1 aufgeführt, **ist dadurch gekennzeichnet, dass** ein Warmluftgebläse (16) dafür sorgt, dass die heiße und feuchte Luft in der Wanne (2) im Warmluftkanal (11) strömen und zum Verdampfer (9) geleitet werden kann.

5. - Eine Geschirrspülmaschine (1), wie in Anspruch 1 aufgeführt, die einen Trocknungskanal (17) und ein Trocknungsgebläse (18) umfasst, **ist dadurch gekennzeichnet, dass** der Heißluftkanal (11) mit dem Trocknungskanal (17) strömungstechnisch verbunden ist und zu dem die durch den Trocknungskanal (17) umgewälzte heiße und feuchte Luft zumindest teilweise geführt wird.

6. - Eine Geschirrspülmaschine (1), wie in Anspruch 5 aufgeführt, **ist dadurch gekennzeichnet, dass** eine Blende (19) zwischen dem Trocknungskanal (17) und dem Heißluftkanal (11) angeordnet ist.

## Revendications

1. - Un lave-vaisselle (1) **comprenant** une cuve (2) ; un puisard (3) où l'eau de lavage est recueillie ; une pompe de circulation (4) qui assure le refoulement de l'eau de lavage sur les articles à laver ; un système de pompe à chaleur (5) situé dans la partie inférieure de la cuve (2) qui assure le chauffage de l'eau de lavage ; un compresseur (6), un réceptacle de condensation (7), un condenseur (8), un évaporateur (9) et au moins un ventilateur d'évaporateur (10) qui constituent le système de pompe à chaleur (5) ; un conduit d'air chaud (11) qui permet de diriger l'air chaud et humide de l'environnement de lavage dans la cuve (2) vers l'évaporateur (9) afin d'augmenter la quantité de condensation sur la surface de l'évaporateur (9) ; et un réceptacle de condensation (12) disposé sous l'évaporateur (9) et dans lequel l'eau se condensant sur l'évaporateur (9) est recueillie ; **caractérisé en ce que** le ventilateur de l'évaporateur (10) est conçu pour souffler de l'air ambiant sur l'évaporateur (9) afin d'augmenter encore la quantité de condensation sur la surface de l'évaporateur (9), et le lave-vaisselle (1) comprend en outre une conduite d'alimentation en eau (13) et une pompe d'alimentation en eau (14) qui fournit l'eau dans le réceptacle de condensation (12) pour être utilisée dans le processus de lavage.

2. - Un lave-vaisselle (1) selon la déclaration 1, **caractérisé par** un réservoir (15) et la conduite d'alimentation en eau (13) qui transfère l'eau dans le réceptacle de condensation (12) vers le réservoir (15).

3. - Un lave-vaisselle (1) selon la déclaration 1, **caractérisé par** la conduite d'alimentation en eau (13) qui transfère l'eau dans le réceptacle de condensation (12) directement vers le puisard (3).

4. - Un lave-vaisselle (1) selon la déclaration 1, **caractérisé par** un ventilateur d'air chaud (16) qui permet à l'air chaud et humide de la cuve (2) de circuler dans le conduit d'air chaud (11) afin d'être guidé vers l'évaporateur (9).

5. - Un lave-vaisselle (1) selon la déclaration 1, comprenant un conduit de séchage (17) et un ventilateur de séchage (18), **caractérisé par** le conduit d'air chaud (11) qui est relié fluidiquement au conduit de séchage (17), et dans lequel l'air chaud et humide circulant dans le conduit de séchage (17) est au moins partiellement guidé.

6. - Un lave-vaisselle (1) selon la déclaration 5, **caractérisé par** un obturateur (19) qui est disposé entre le conduit de séchage (17) et le conduit d'air chaud (11).
